# EUROPÄISCHE PATENTSCHRIFT

(11) **EP 1 931 872 B1**
(45) Veröffentlichungstag und Bekanntmachung des Hinweises auf die Patenterteilung: **14.10.2015**
(21) Anmeldenummer: 06764317.1
(22) Anmeldetag: 08.08.2006
(51) Int. Cl.: F02M 21/02, H01M 8/04

(54) **VENTIL ZUM STEUERN EINES FLUIDS**
VALVE FOR CONTROLLING A FLUID
VANNE POUR REGULER UN FLUIDE

(30) Priorität: 28.09.2005 DE 102005046433
(43) Veröffentlichungstag der Anmeldung: 18.06.2008
(73) Patentinhaber: ROBERT BOSCH GMBH, 70442 Stuttgart (DE)
(72) Erfinder: KRAUSS, Bernd, 71297 Moensheim (DE); MILLER, Frank, 74360 Ilsfeld (DE); OKRENT, Elmar, 71686 Remseck (DE)
(86) Internationale Anmeldenummer: PCT/EP2006/065156
(87) Internationale Veröffentlichungsnummer: WO 2007/036382

(56) Entgegenhaltungen:
- WO-A1-98/10184
- DE-A1- 10 352 287
- JP-A- 2001 132 549
- JP-A- 2001 214 811
- JP-A- 2003 097 359
- US-A- 5 293 856
- US-A- 5 383 647
- US-A1- 2001 025 892

## Beschreibung

### Stand der Technik

Die vorliegende Erfindung geht von einem Ventil zum Steuern eines Fluids, insbesondere zum Steuern eines Gases, gemäß der im Oberbegriff des Patentanspruchs 1 näher definierten Art aus.

Ein derartiges Ventil ist aus der Praxis bekannt und beispielsweise ein Gassteuerventil, das bei einem Gasmotor oder auch einer Brennstoffzelle eines Kraftfahrzeugs, beispielsweise eines Nutzfahrzeugs, oder bei einer stationären Anwendung einsetzbar ist.

Ein bekanntes Ventil der einleitend genannten Art, mittels dessen ein Verbrennungsgas in ein Saugrohr eines Gasmotors oder einer Brennstoffzelle eingeblasen wird, umfasst ein Ventilgehäuse, das eine elektromagnetische Betätigungseinheit für einen Magnetanker aufnimmt. Der Magnetanker ist in dem Ventilgehäuse, insbesondere in einer Hülse des Ventilgehäuses axial verschiebbar geführt und in einem stirnseitigen Bereich als Ventilschließglied ausgebildet, das mit einem Ventilsitz zusammenwirkt. In Abhängigkeit von der Stellung des Magnetankers bzw. des Ventilschließglieds ist ein Fluidstrom von einer Zuströmseite zu einer Abströmseite des Ventils steuerbar. Die Achse des Ausströmkegels des Gases fällt hierbei mit der Achse des Ventils zusammen.

Bei einem Einsatz in Verbindung mit einem Gasmotor werden in vorstehend beschriebener Art ausgebildete Gasventile bisher in der Regel aus einbautechnischen Gründen in einem steilen Winkel, beispielsweise in einem Winkel zwischen 45° und 90° zu der Achse des Saugrohrs eingebracht. Aufgrund dieser Anordnung entsteht beim Einblasen des Gases in das Saugrohr in diesem ein Gaskissen, das als Sperrschicht für Luft wirkt, die durch das Saugrohr in Richtung eines Zylinders des Gasmotors gefördert wird. Dies hat zur Folge, dass beim Öffnen des Zylinders nicht die zur Verbrennung erforderliche Menge an Luft in den Zylinder eingefördert wird bzw. Einbußen bezüglich des Füllungsgrades hingenommen werden müssen.

Bei einer Anwendung des oben beschriebenen Gasventils nach dem Stand der Technik bei einer Brennstoffzelle wird das Gasventil in der Regel so eingebaut, dass dessen Achse rechtwinklig zur Achse einer Gaszuführungseinheit steht. Hierbei kann es innerhalb der Gaszuführungseinheit zur Ausbildung von stehenden Wellen kommen. Durch den geraden Einbau des Dosierventils liegen also ungünstige Gastransportbedingungen vor.

Der Erfindung liegt die Aufgabe zugrunde, ein Ventil zum Steuern eines Fluids zu schaffen, mittels dessen eine optimierte Gasführung bei der Anwendung in Verbindung mit Gasverbrennungsmotoren oder auch in Verbindung mit Brennstoffzellen erreicht wird.

Aus der JP 2001-132549 A ist bereits ein Ventil zum Steuern eines Fluids, insbesondere zum Steuern eines Gases bekannt. Das Ventil umfasst ein Ventilgehäuse und eine Betätigungseinheit für ein Ventilschließglied, das in dem Ventilgehäuse geführt ist und mit einem Ventilsitz zusammenwirkt, so dass ein Fluidstrom von einer Zuströmseite zu einer Abströmseite des Ventils steuerbar ist An der Abströmseite des Ventils ist eine Gasumlenkungs- und/oder -verteilungseinrichtung vorgesehen, die in Form eines Düsenrohres ausgebildet ist. Das aus dem Gasventil herausragende Düsenrohr verläuft abgewinkelt und ist so ausgerichtet, dass sein Ende in der Mitte einer Ansaugluftleitung positioniert ist. Da das Düsenrohr gezielt derart abgewinkelt ist, dass es entgegen der Luftströmungsrichtung in der Ansaugluftleitung verläuft, ist es zur widerstands- und wirbelarmen Umströmung abgerundet ausgebildet. In der Seitenwandung des Düsenrohrs sind mehrere Abströmöffnungen vorgesehen. Umfangseitig sind die Abströmöffnungen am Düsenrohr von schaufelartigen Strömungsblechen umgeben. Diese Strömungsbleche können auch von der Innenwandung der Ansaügluftleitung her nach innen zu den Abströmöffnungen des Düsenrohrs verlaufen. Diese Anordnung ist kompliziert und aufwändig in der Herstellung.

### Vorteile der Erfindung

Das erfindungsgemäße Ventil zum Steuern eines Fluids, insbesondere zum Steuern eines Gases, mit den Merkmalen nach dem Oberbegriff des Patentanspruchs 1, bei welchem Ventil an der Abströmseite eine Gasumlenkungs- und/oder - verteilungseinrichtung vorgesehen ist, ermöglicht durch entsprechende Auslegung der Gasumlenkungs- und/oder - verteilungseinrichtung eine definierte, hinsichtlich der jeweiligen Anforderungen optimierte und definierte Einbringung eines Gases in einen Raum, in den das Ventil mündet.

Durch die Umlenkung des Gases im Bereich der Abströmseite des Ventils wird bei Einsatz des Ventils bei einem Saugrohr eines Gasverbrennungsmotors eine Abbremsung bzw. Absperrung der durch das Saugrohr strömenden Luftmasse im Bereich zwischen einem Luftmassenstrommesser bzw. einer Drosselkappe einerseits und einem Zylinder bzw. von dessen Einlassventil andererseits verhindert. Die Gasumlenkeinrichtung gewährleistet, dass der Gasstrom dem Saugrohr hinsichtlich Einströmwinkel und Einströmhöhe optimiert zugeführt werden kann. Zudem wird eine mögliche Geräuschentwicklung beispielsweise durch das Auftreffen eines Gasstrahls auf ein beispielsweise gegenüberliegendes Kunststoffsaugrohr vermieden. Bei einer Anwendung des Ventils nach der Erfindung in Verbindung mit einem Gasverbrennungsmotor kann damit gegenüber dem Einsatz eines Ventils ohne Gasumlenkeinrichtung an der Abströmseite eine deutliche Verbesserung des Verbrennungsverhaltens erreicht werden.

Bei dem Einsatz eines erfindungsgemäß ausgeführten Ventils bei einer Brennstoffzelle kann eine Optimierung des Gasströmungsverhaltens in einer Gaszuführungseinheit erreicht werden.

Des Weiteren kann durch Einsatz einer Gasumlenkungs- und/oder -verteilungseinrichtung durch eine radiale oder axiale Gaslenkung einer gute Gemischaufbereitung erreicht werden. Bei einer axialen Ausströmung erfolgt durch die Gasumlenkungs- und/oder -verteilungseinrichtung eine Reduzierung der Geschwindigkeit des Gasstrahls.

Die Gasumlenkungs- und/oder -verteilungseinrichtung kann einstückig mit dem Ventilgehäuse ausgebildet sein und damit beispielsweise beim Spritzen des Ventilgehäuses integriert hergestellt werden oder auch ein separates Bauteil darstellen, das mit dem Ventilgehäuse bzw. einem im Bereich der Abströmseite angeordneten Bauteil des Ventils verklebt, verschweißt oder verpresst ist.

Bei einer besonders kostengünstig ausgeführten Ausführungsform des Ventils nach der Erfindung ist die Umlenkeinrichtung aus einem gebogenen oder gewinkelten Rohrstück gebildet. Eine solche Gasumlenkeinrichtung stellt ein Bauteil dar, das bei einem Ventil in einfacher Weise integrierbar ist. Das Rohrstück hat beispielsweise eine abströmseitige Ausströmdüse, deren Achse mit der Achse des Ventils einen Winkel zwischen 60° und 90° aufspannt. Das Rohrstück kann auch stirnseitig geschlossen und mit radialen Ausströmöffnungen versehen sein.

Wenn das Rohrstück ein separates Bauteil darstellt, ist es vorteilhaft so ausgeführt, dass es auf einen abströmseitigen Stutzen des Ventilgehäuses aufsetzbar ist, dessen Außendurchmesser mit dem Innendurchmesser des Rohrstücks korrespondiert. Insbesondere können durch eine derartige Auslegung bereits bestehende Gasventile im Sinne der Erfindung modifiziert werden.

Bei einer alternativen Ausführungsform des Ventils nach der Erfindung ist die Gasumlenkungs- und/oder -verteilungseinrichtung aus einer Lochplatte gebildet, die an der Abströmseite des Ventils eingepasst ist und lineare Kanäle aufweist, die gegenüber der Achse des Ventils angestellt sein können. Die Lochplatte ist beispielsweise aus Kunststoff oder Metall gefertigt.

Um eine einwandfreie Ventilfunktion zu gewährleisten, ist der Durchflussquerschnitt der Kanäle mindestens zweimal größer als ein am Ventilsitz definierter Zumessquerschnitt.

Die Erfindung hat auch ein Saugrohr eines Gasverbrennungsmotors zum Gegenstand, das mit einem Rohrkörper ausgebildet ist, der von einem erfindungsgemäß ausgebildeten Ventil durchgriffen ist, das in einen Innenraum des Rohrkörpers eintaucht.

Des Weiteren hat die Erfindung eine Brennstoffzelle mit mindestens einer Gaszuführeinheit zum Gegenstand, die einen Gaszuführkanal aufweist, wobei mindestens ein erfindungsgemäß ausgebildetes Ventil in den Gaszuführkanal eintaucht.

Weitere Vorteile und vorteilhafte Ausgestaltungen des Gegenstandes nach der Erfindung sind der Beschreibung, der Zeichnung und den Patentansprüchen entnehmbar.

### Zeichnung

Ausführungsbeispiele des Gegenstandes nach der Erfindung sind in der Zeichnung schematisch vereinfacht dargestellt und werden in der nachfolgenden Beschreibung näher erläutert. Es zeigen
- Figur 1: einen vereinfachten Längsschnitt durch ein Saugrohr eines Gasverbrennungsmotors, wobei die Wirkung eines erfindungsgemäß ausgestalteten Ventils der Wirkung eines Ventils nach dem Stand der Technik gegenübergestellt ist;
- Figur 2: eine Gaszufuhreinheit einer Brennstoffzelle, wobei die Wirkung eines erfindungsgemäß ausgebildeten Gasventils der Wirkung von Gasventilen nach dem Stand der Technik gegenübergestellt ist;
- Figur 3: eine erste Variante einer rohrstückartig ausgebildeten Umlenkeinrichtung;
- Figur 4: eine zweite Variante einer rohrstückartig ausgebildeten Umlenkeinrichtung;
- Figur 5: eine dritte Variante einer rohrstückartig ausgebildeten Umlenkeinrichtung;
- Figur 6: einen Längsschnitt durch ein Gasventil mit einer als Lochplatte ausgebildeten Umlenkeinrichtung im Bereich der Ventilabströmseite;
- Figur 7: eine vergrößerte Darstellung der Lochplatte des Gasventils nach Figur 6;
- Figur 8: ein Gasventil der in Figur 6 dargestellten Art mit einer alternativ ausgeführten Lochplatte;
- Figur 9: ein Gasventil der in Figur 6 dargestellten Art mit einer weiteren Ausführungsform einer Lochplatte;
- Figur 10: ein Gasventil der in Figur 6 dargestellten Art mit einer weiteren Ausführungsform einer Lochplatte;
- Figur 11: einen Ausströmbereich eines Gasventils mit einer stirnseitig geschlossenen, rohrstückartigen Gasumlenkungs- und -verteilungseinrichtung;
- Figur 12: einen Abströmbereich eines Gasventils mit einer stirnseitig geschlossenen, rohrstückartigen Umlenk- und Verteilungseinrichtung;
- Figur 13: einen Abströmbereich eines Gasventils mit einer weiteren Ausführung einer stirnseitig geschlossenen, rohrstückartig ausgebildeten Umlenk- und Verteilungseinrichtung; und
- Figur 14: einen Abströmbereich eines Gasventils mit einer letzten Ausführung einer stirnseitig geschlossenen, rohrstückartig ausgebildeten Umlenk- und Verteilungseinrichtung.

### Beschreibung der Ausführungsbeispiele

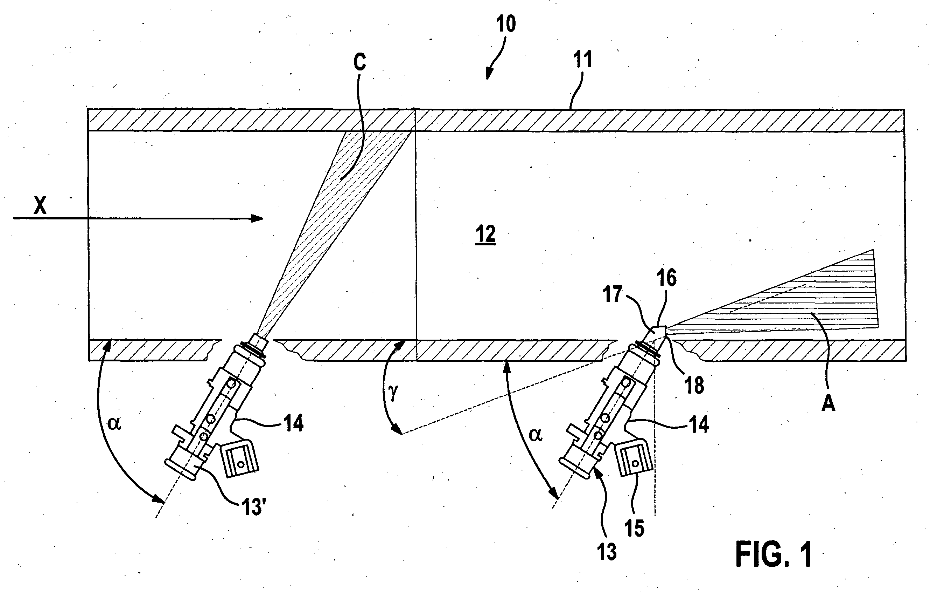

In Figur 1 ist ein Saugrohr 10 dargestellt, das zu einem Zylinder eines Gasverbrennungsmotors eines Kraftfahrzeugs führt. Das Saugrohr 10 umfasst einen Rohrkörper 11, der einen Innenraum 12 begrenzt, der als Strömungsweg für dem Zylinder zugeführte Gase dient, die einerseits in axialer Richtung des Rohrkörpers 11 gemäß einem Pfeil X geförderte Luft und andererseits ein Brenngas umfassen, welches mittels eines Gaseinblasventils 13 in den Innenraum 12 des Rohrkörpers 11 eingeblasen wird. Zur Verdeutlichung der Erfindung ist im linken Bereich von Figur 1 ein herkömmliches Gaseinblasventil 13' angeordnet.

Das erfindungsgemäß ausgelegte Gaseinblasventil 13 ist im rechten Bereich von Figur 1 dargestellt und ist ein elektromagnetisch betätigtes Ventil mit einem Ventilgehäuse 14, in dem eine in Figur 1 nicht näher dargestellte elektromagnetische Betätigungseinheit für ein Ventilschließglied angeordnet ist, das in dem Ventilgehäuse 14 geführt ist und mit einem Ventilsitz zusammenwirkt, so dass ein Brenngasstrom von einer Zuströmseite 15 zu einer Abströmseite 16 des Gasventils 13 steuerbar ist.

An der Abströmseite 16 des Gasventils 13 ist eine als Rohrstück ausgebildete Umlenkeinrichtung 17 angeordnet, die mit dem Ventilgehäuse 14 verklebt ist.

Die Umlenkeinrichtung 17 hat eine Ausströmdüse 18, deren Achse mit der Achse des Rohrkörpers 11 des Saugrohrs 10 einen, Winkel γ bildet.

Die Achse des Ventils 13 bildet mit der Achse des Rohrkörpers 11 des Saugrohrs 10 einen Winkel α. Eine derartige Anordnung des Gasventils 13 und eine derartige Auslegung der Umlenkeinrichtung 17 bewirkt, dass das in das Saugrohr 10 eingeblasene Brenngas A in einem flachen Einströmwinkel in den Innenraum 12 des Saugrohrs 10 eingebracht wird. Dadurch wird die Strömung der Luft in dem Innenraum 12 nicht beeinträchtigt.

Hingegen bildet sich bei dem im linken Bereich von Figur 1 angeordneten, in herkömmlicher Weise ausgebildeten Gaseinblasventil 13', dessen Achse gegenüber der Achse des Rohrkörpers 11 ebenfalls einen Winkel α, von beispielsweise 60° bildet und das keine Gasumlenkeinrichtung aufweist, beim Einblasen des Brenngases ein Brenngaspolster C aus, das als Sperrschicht für die durch das Saugrohr 10 gemäß dem Pfeil X geförderte Luft wirkt.

Die erfindungsgemäße Auslegung eines Gasventils führt damit zu einer deutlichen Verbesserung des Verbrennungsverhaltens eines Gasmotors.

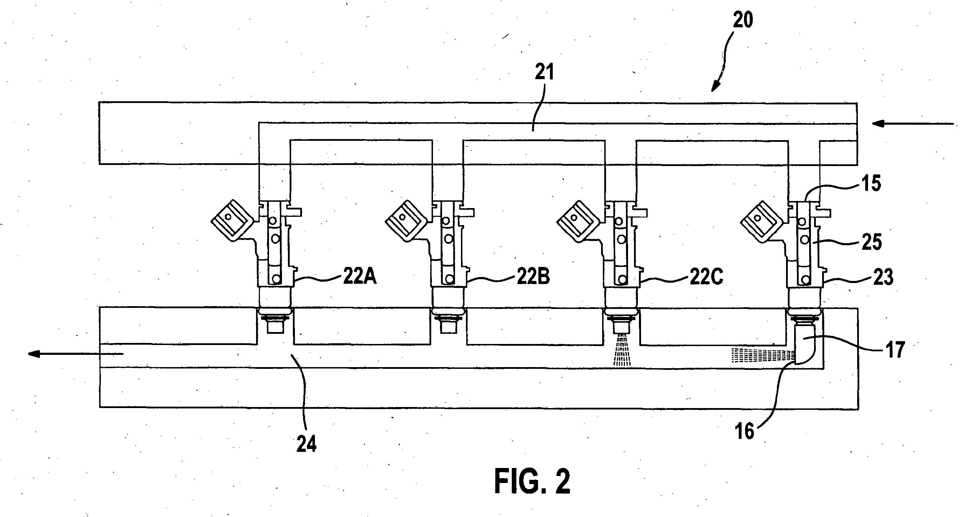

In Figur 2 ist eine Gaszuführeinheit 20 einer bei einem Kraftfahrzeug eingesetzten Brennstoffzelle dargestellt. Die Gaszuführeinheit 20, die zum Zuführen von Wasserstoff in die Brennstoffzelle dient, umfasst einen Zuströmkanal 21, der zu Gaseinblasventilen 22A, 22B, 22C und 23 führt, die wiederum abströmseitig zu einem Abströmkanal 24 führen, der mit der Brennstoffzelle verbunden ist.

Die Gaseinblasventile 22A, 22B und 22C sind in herkömmlicher Weise ausgebildet, so dass der mittels dieser Ventile dosierte Wasserstoff rechtwinklig zur Achse des Abströmkanals 24 zudosiert wird, wie an Hand des Ventils 22C dargestellt ist.

Hingegen ist das Ventil 23 erfindungsgemäß ausgebildet, so dass es ein Ventilgehäuse 25 aufweist, an dessen abströmseitigem Ende eine Gasumlenkeinrichtung 17 angeordnet ist, die rohrstückartig ausgebildet ist und eine Umlenkung des mittels des Ventils 25 zudosierten Gases um 90° bewirkt. Eine derartige Umlenkung des Wasserstoffstroms führt zu einer Verbesserung der Gasströmung in dem Abströmkanal 24.

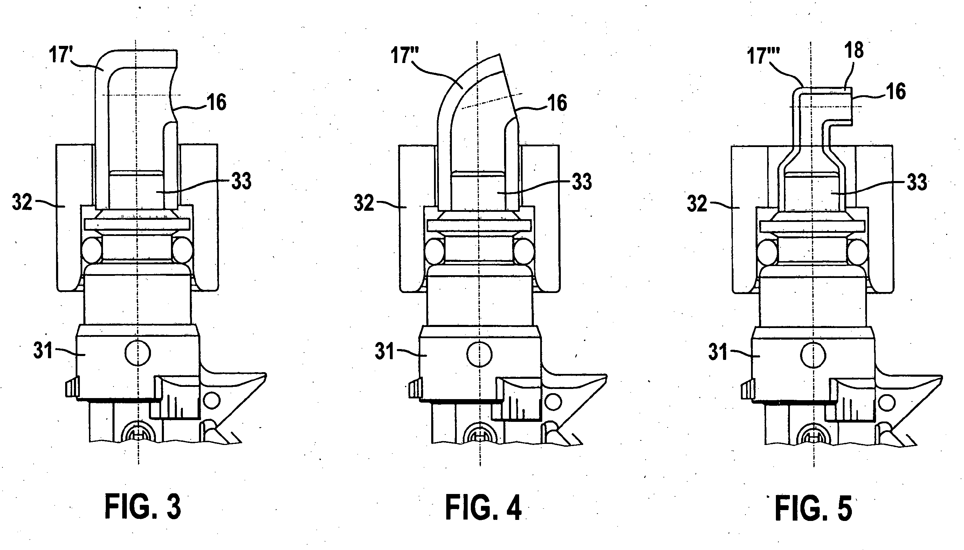

In den Figuren 3 bis 5 sind unterschiedliche Ausführungsformen einer rohrstückartig ausgebildeten Gasumlenkeinrichtung am abströmseitigen Ende eines Gasventils dargestellt, welches jeweils für eine Gasverbrennungsmotoranwendung oder eine Brennstoffzellenanwendung ausgelegt ist.

Das Gasventil nach Figur 3 umfasst ein Ventilgehäuse 31, das an einer Ventilaufnahme 32 fixiert ist und an seinem abströmseitigen Ende mit einer rohrstückartigen Umlenkeinrichtung 17' versehen ist, die aus einem gebogenen Rohrstück besteht und zudosiertes Gas um etwa 90° umlenkt. Der Strömungsquerschnitt der Umlenkeinrichtung 17' ist über deren gesamte Länge konstant.

Das Gasventil nach Figur 4 umfasst ebenfalls ein Ventilgehäuse 31, das in einer Ventilaufnahme 32 befestigt ist. Am abströmseitigen Ende weist das Ventilgehäuse 31 eine Umlenkeinrichtung 17" auf, die eine Umlenkung des Gasstroms um beispielsweise 60° bewirkt und ebenfalls aus einem gebogenen Rohrstück mit konstantem Innendurchmesser gebildet ist.

Die Variante nach Figur 5 unterscheidet sich von den Varianten nach Figur 3 und Figur 4 dadurch, dass das Ventilgehäuse 31 mit einer rohrstückartigen Umlenkeinrichtung 17"' versehen ist, die eine Umlenkung des Gasstroms um 90° bewirkt und deren Innendurchmesser am abströmseitigen Ende gegenüber dem zuströmseitigen Ende verringert ist, so dass eine Düse 18 ausgebildet ist. Der Innendurchmesser am zuströmseitigen Ende korrespondiert mit dem Außendurchmesser eines Anschlussstutzens 33 des Ventilgehäuses 31.

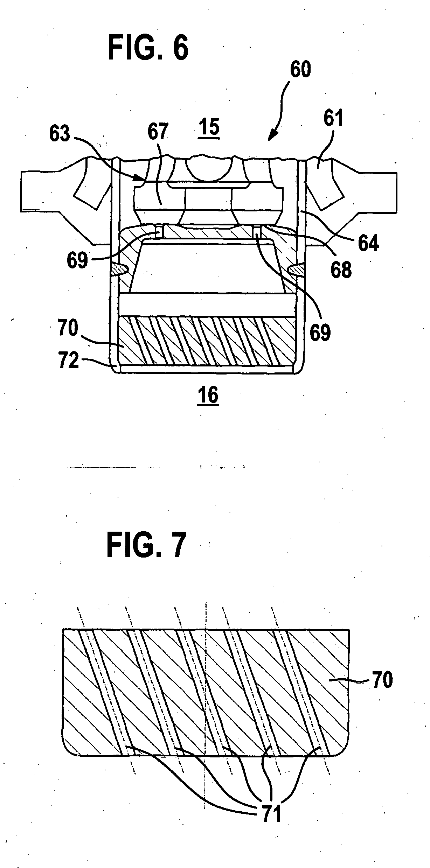

In Figur 6 ist ein Ausschnitt eines Gaseinblasventils 60 dargestellt, das mit einem Ventilgehäuse 61 versehen ist, das eine elektromagnetische Betätigungseinheit für einen Magnetanker 63 aufnimmt, der in einer Hülse 64 axial beweglich geführt ist und sich in bekannter Weise über eine Rückstellfeder an einem stopfenartigen Einsatz abstützt.

An seinem abströmseitigen Ende ist der Magnetanker 63 als Ventilschließglied 67 ausgebildet, das mit einem Ventilsitz 68 zur Steuerung eines Gasstroms durch Zumessbohrungen 69 zusammenwirkt.

Stromab der Zumessbohrungen 69 ist eine Lochplatte 70 angeordnet, die an der dem Ventilgehäuse 61 zugeordneten Hülse 64 angeordnet ist. Die Lochplatte 70 ist durch einen Bund 72 an der Sitzträgerhülse 64 gegen eine axiale Verschiebung in Abströmrichtung gesichert. Die Lochplatte 70 ist beispielsweise aus Kunststoff gefertigt und weist mehrere lineare Kanäle 71 auf, die parallel ausgerichtet sind und deren Achsen gegenüber der Achse des Ventils 60 angestellt sind. Der Winkel, den die Achsen der Kanäle 71 mit der Achse des Ventils 60 aufspannen, beträgt im vorliegenden Fall etwa 30°, kann aber je nach Einsatzbedingungen bis zu 60° oder mehr betragen. Dieser Winkel bestimmt die Strömungsrichtung des Gases.

Der summierte Durchflussquerschnitt der Kanäle 71 ist mindestens zweimal größer als der Zumessquerschnitt der Zumessbohrungen 69, die im Bereich des Ventilsitzes 68 ausgebildet sind. Dadurch wird gewährleistet, dass die Hauptdrosselstelle in dem Ventil 60 an dem Ventilsitz 68 liegt.

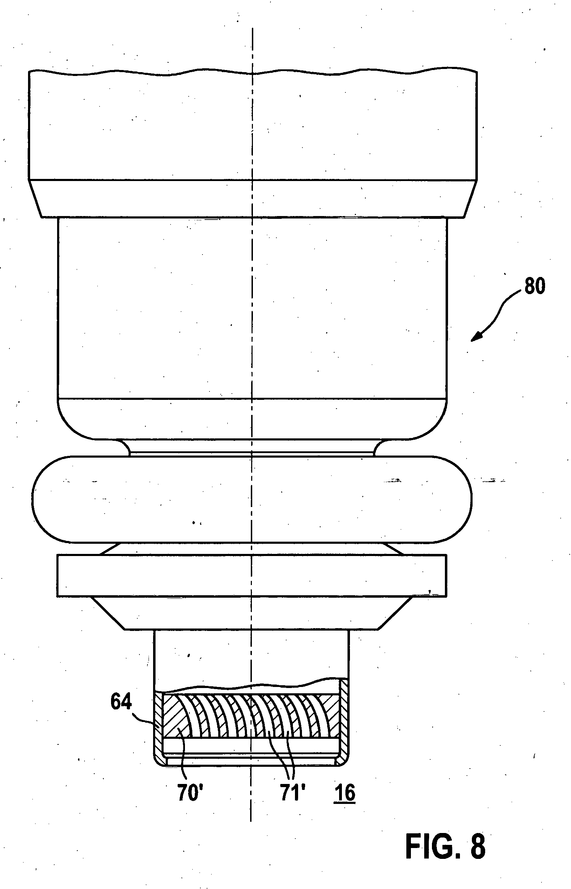

In Figur 8 ist ein entsprechend dem Gaseinblasventil nach Figur 6 ausgebildetes Gaseinblasventil 80 dargestellt, das an seiner Abströmseite 16 mit einer Lochplatte 70' versehen ist, die in eine Ventilhülse 64 eingepasst ist. Die Lochplatte 70' ist ebenfalls aus Kunststoff gefertigt und weist mehrere bogenförmige bzw. gekrümmte Kanäle 71' auf, die den gleichen Krümmungssinn haben.

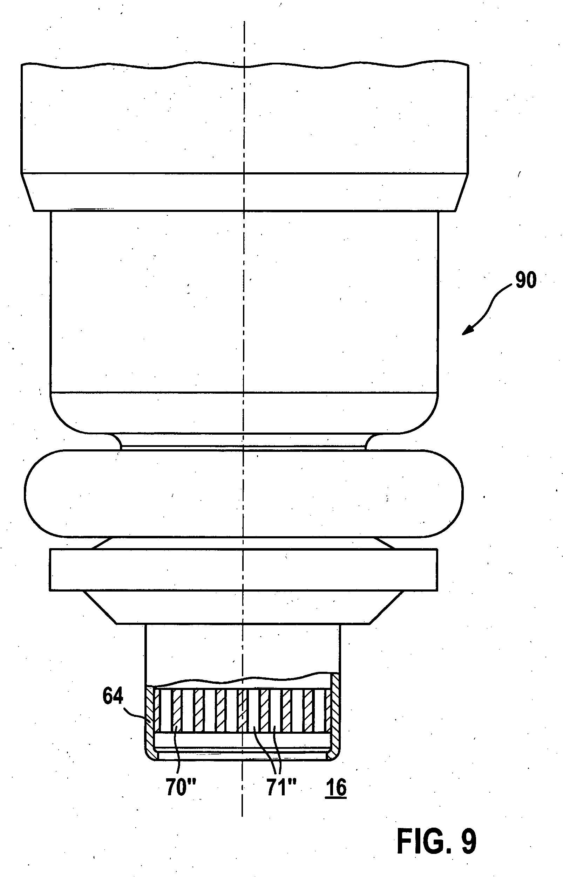

In Figur 9 ist eine weitere Ausführungsform eines Gaseinblasventils 90 der in Figur 6 dargestellten Art gezeigt, welches ebenfalls an seiner Abströmseite mit einer Lochplatte 70" versehen ist, die in eine Ventilhülse 64 eingepasst ist. Die Lochplatte 70" weist jedoch lineare Kanäle 71" auf, deren Achse parallel zur Achse des Gaseinblasventils 90 ausgerichtet ist.

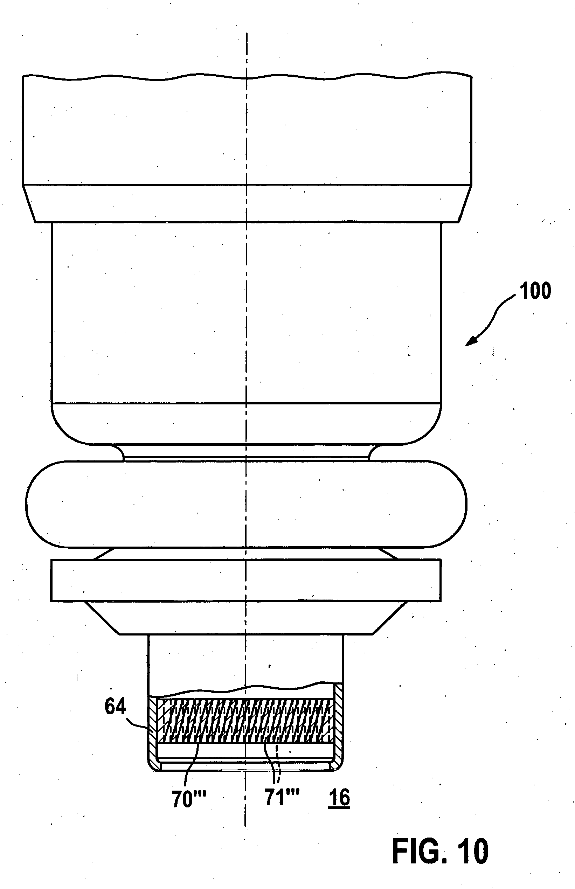

In Figur 10 ist ein weiteres Gaseinblasventil 100 der in Figur 6 dargestellten Art gezeigt. Das Gaseinblasventil 100 umfasst ebenfalls im Bereich seiner Abströmseite 16 eine Lochplatte 70"', die in eine Ventilhülse 64 eingepasst und in dieser gesichert ist. Die Lochplatte 70"' weist netzartig ausgebildete Linearkanäle 71"' auf, die teilweise gegenüber der Achse des Gaseinblasventils 100 angestellt und teilweise parallel zur Achse des Gaseinblasventils 100 ausgerichtet sind.

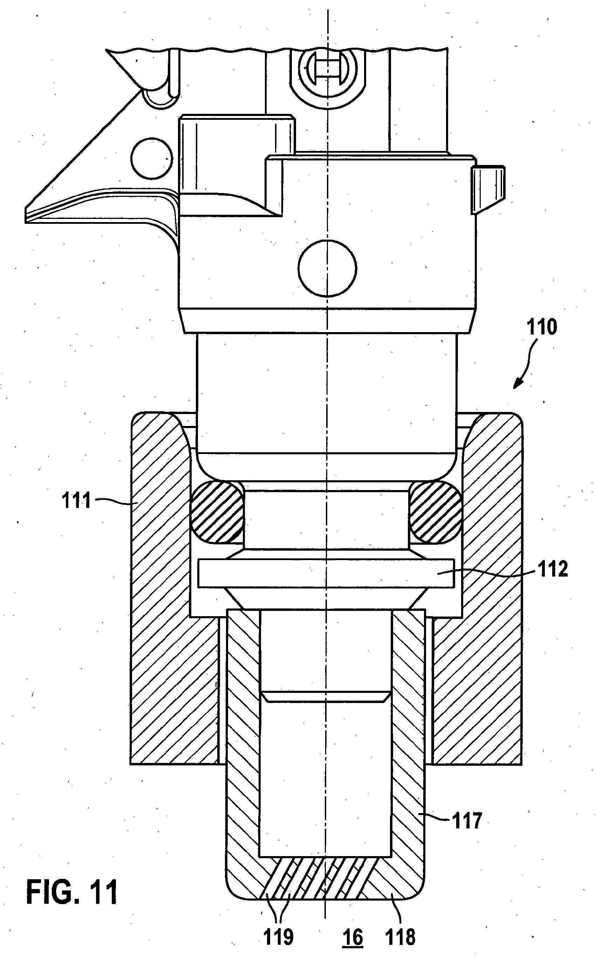

In Figur 11 ist ein Gaseinblasventil 110 dargestellt, das in einen Ventilstutzen 111 eines Saugrohrs eines Gasmotors eingesetzt ist. Das Gaseinblasventil 110 umfasst ein Ventilgehäuse 112, auf das im Bereich einer Abströmseite 16, d. h. im Bereich des in das Saugrohr eintauchenden Ventilabschnitts, eine topfartige bzw. rohrstückartige Gasumlenk- und -verteilungseinrichtung 117 aufgesetzt ist. Die Gasumlenk- und -verteilungseinrichtung 117 umfasst einen Boden 118, in dem lineare Kanäle 119 ausgebildet sind, die gegenüber der Achse des Gaseinblasventils 110 angestellt sind. Die Linearkanäle 119 bewirken damit eine Umlenkung und Verteilung des von dem Gaseinblasventils 110 aufgeblasenen Gases.

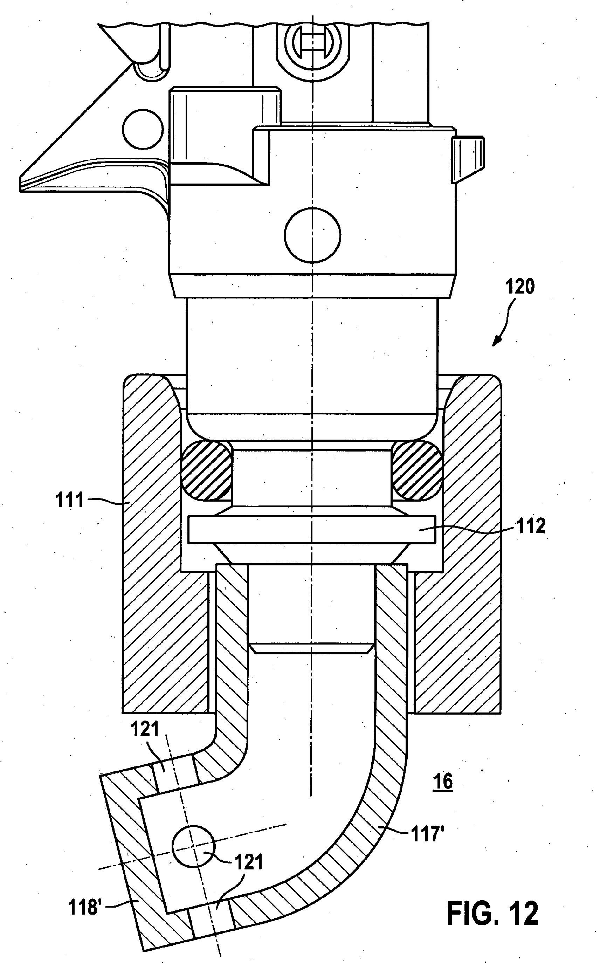

In Figur 12 ist ein Gaseinblasventil 120 dargestellt, das ebenfalls in einen Ventilstutzen 112 eines Saugrohrs eines Gasmotors eingesetzt ist und ein Ventilgehäuse 112 aufweist, auf das im Bereich der Ausströmseite 16 eine rohrstückartige Gasumlenk- und -verteilungseinrichtung 117' aufgesetzt ist. Die Gasumlenk- und -verteilungseinrichtung 117' hat eine mit einem Boden 118' verschlossene Stirnseite und an ihrer Seitenwand über den Umfang verteilt vier Ausströmöffnungen 121, von denen in Figur 12 drei dargestellt sind.

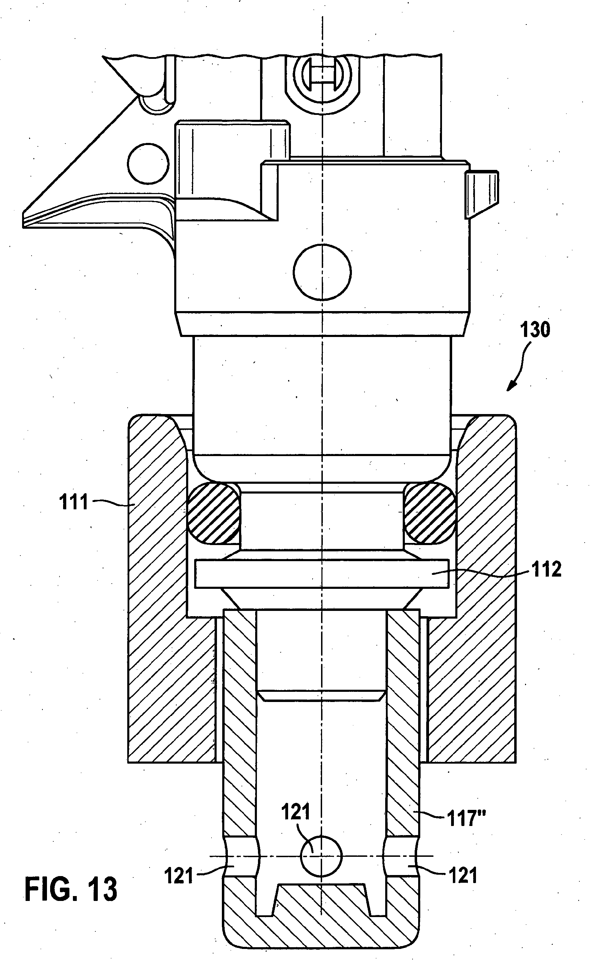

In Figur 13 ist eine weitere Ausführungsform eines Gaseinblasventils 130 dargestellt. Das Gaseinblasventil 130 unterscheidet sich von demjenigen nach Figur 12 dadurch, dass es eine stirnseitig geschlossene rohrstückartige Gasumlenk- und -verteilungseinrichtung 117' aufweist, die nicht gekrümmt sondern gerade ausgebildet ist. Die Achse der Gasumlenk- und -verteilungseinrichtung 117" fällt also mit der Achse des Gaseinblasventils 130 zusammen. Entsprechend der Ausführungsform, die in Figur 12 dargestellt ist, weist die Gasumlenk- und -verteilungseinrichtung 117" über ihrem Umfang verteilt vier Gasaustrittsöffnungen 121 auf, die bezüglich der Achse der Gasumlenk- und - verteilungs-einrichtung 117" radial ausgerichtet sind und von denen in Figur 13 drei dargestellt sind.

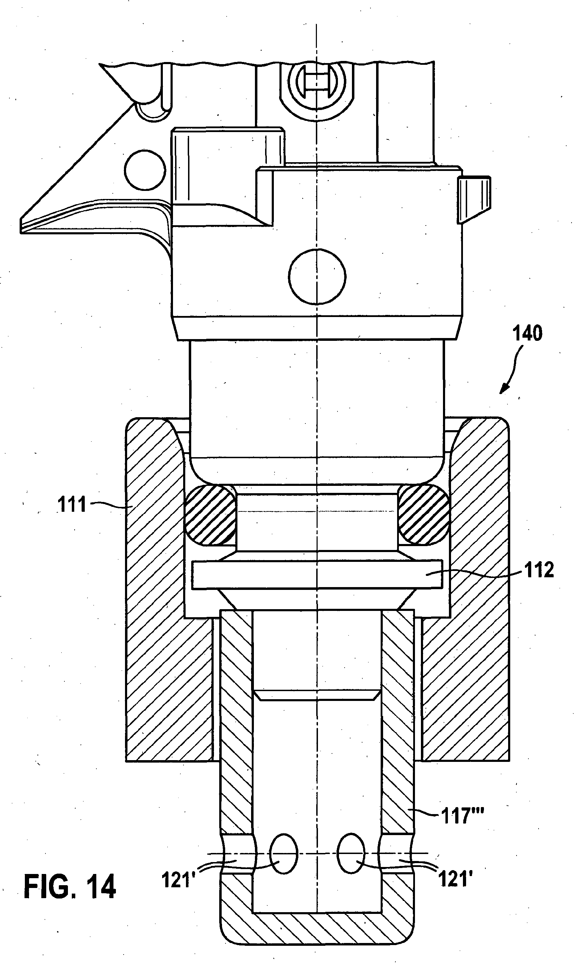

In Figur 14 ist ein Gaseinblasventil 140 dargestellt, das im Wesentlichen demjenigen nach Figur 13 entspricht, sich von diesem aber dadurch unterscheidet, dass es mit einer topfartig ausgebildeten Gasumlenk- und -verteilungseinrichtung 117"' versehen ist, die über ihren Umfang verteilt sechs Gasausströmöffnungen 121' aufweist, von denen in Figur 14 vier dargestellt sind. Im Übrigen entspricht die Ausbildung des Gaseinblasventils 140 derjenigen des Gaseinblasventils nach Figur 13.

## Patentansprüche

1. Ventil zum Steuern eines Fluids, insbesondere zum Steuern eines Gases, umfassend ein Ventilgehäuse (14, 25, 31, 61, 112) und eine Betätigungseinheit (62) für ein Ventilschließglied (67), das in dem Ventilgehäuse (14, 25, 31, 61, 112) geführt ist und mit einem Ventilsitz (68) zusammenwirkt, so dass ein Fluidstrom von einer Zuströmseite (15) zu einer Abströmseite (16) des Ventils steuerbar ist, wobei an der Abströmseite (16) des Ventils eine Gasumlenkungs- und/oder -verteilungseinrichtung (17, 17', 17", 17", 70, 70', 70", 70"', 117, 117', 117", 117"') vorgesehen ist.
**dadurch gekennzeichnet,**
**dass** die Gasumlenkungs- und/oder -verteilungseinrichtung (117", 117"') aus einem am Ventilgehäuse (112) befestigten Rohrstück gebildet ist, wobei die Achse des Rohrstücks mit der Achse des Gaseinblasventils (140) zusammenfällt und das Rohrstück mit einer senkrecht zur Achse des Rohrstücks verlaufenden ebenen Stirnseite geschlossen ist und an seiner Seitenwand mindestens eine Abströmöffnung (121, 121') aufweist, wobei das Rohrstück (117", 117"') auf einen abströmseitigen Stutzen (33) des Ventilgehäuses (112) aufgesetzt ist und einen Innendurchmesser aufweist, der mit dem Außendurchmesser des Stutzens (33) korrespondiert und der Ventilsitz (68) im Bereich innerhalb des Stutzens (33) angeordnet ist.

2. Ventil nach Anspruch 1, **dadurch gekennzeichnet, dass** die Gasumlenkungs- und/oder -verteilungseinrichtung (117"') mit dem Ventilgehäuse (112) verklebt, verschweißt oder verpresst ist.

## Claims

1. Valve for controlling a fluid, in particular for controlling a gas, comprising a valve housing (14, 25, 31, 61, 112) and an actuating unit (62) for a valve closing member (67) which is guided in the valve housing (14, 25, 31, 61, 112) and interacts with a valve seat (68), with the result that a fluid flow from an inflow side (15) to an outflow side (16) of the valve can be controlled, a gas deflection and/or distribution device (17, 17', 17", 17"', 70, 70', 70", 70"', 117, 117', 117", 117"') being provided on the outflow side (16) of the valve, **characterized in that** the gas deflection and/or distribution device (117", 117"') is formed from a pipe piece which is fastened to the valve housing (112), the axis of the pipe piece coinciding with the axis of the gas injection valve (140), and the pipe piece being closed by way of a planar end side which runs perpendicularly with respect to the axis of the pipe piece and having at least one outflow opening (121, 121') on its side wall, the pipe piece (117", 117"') being placed onto an outflow-side stub (33) of the valve housing (112) and having an internal diameter which corresponds with the external diameter of the stub (33), and the valve seat (68) being arranged in the region within the stub (33).

2. Valve according to Claim 1, **characterized in that** the gas deflection and/or distribution device (117"') is adhesively bonded, welded or pressed to the valve housing (112).

## Revendications

1. Soupape de commande d'un fluide, en particulier de commande d'un gaz, comprenant un boîtier de soupape (14, 25, 31, 61, 112) et une unité d'actionnement (62) pour un organe de fermeture de soupape (67) qui est guidé dans le boîtier de soupape (14, 25, 31, 61, 112) et qui coopère avec un siège de soupape (68), de telle sorte qu'un courant de fluide depuis un côté d'afflux (15) jusqu'à un côté de sortie (16) de la soupape puisse être commandé, un dispositif de déviation et/ou de distribution de gaz (17, 17', 17", 17''', 70, 70', 70", 70"', 117, 117', 117", 117"') étant prévu au niveau du côté de la sortie (16) de la soupape,
**caractérisée en ce que**
le dispositif de déviation et/ou de distribution de gaz (117", 117"') est constitué d'une pièce tubulaire fixée au boîtier de soupape (112), l'axe de la pièce tubulaire coïncidant avec l'axe d'une soupape de soufflage de gaz (140) et la pièce tubulaire étant fermée avec un côté frontal plan s'étendant perpendiculairement à l'axe de la pièce tubulaire et présentant au niveau de sa paroi latérale au moins une ouverture de sortie (121, 121'), la pièce tubulaire (117", 117"') étant posée sur une tubulure du côté de la sortie (33) du boîtier de soupape (112) et présentant un diamètre intérieur qui correspond au diamètre extérieur de la tubulure (33) et le siège de soupape (68) étant disposé dans la région à l'intérieur de la tubulure (33).

2. Soupape selon la revendication 1, **caractérisée en ce que** le dispositif de déviation et/ou de distribution de gaz (117"') est collé, soudé ou pressé contre le boîtier de soupape (112).
